(19) Europäisches Patentamt / European Patent Office / Office européen des brevets

(11) **EP 4 722 992 A1**

(12) **EUROPEAN PATENT APPLICATION**

(43) Date of publication:
08.04.2026 Bulletin 2026/15

(21) Application number: 25206535.4

(22) Date of filing: 02.10.2025

(51) International Patent Classification (IPC):
**G06N 10/20** (2022.01)    **G06N 10/60** (2022.01)
**G06N 10/70** (2022.01)

(52) Cooperative Patent Classification (CPC):
**G06N 10/70; G06N 10/20; G06N 10/60;**
G06N 10/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 04.10.2024 US 202463703271 P

(71) Applicant: **Xanadu Quantum Technologies Inc.
Toronto ON M5G 2C8 (CA)**

(72) Inventors:
• **VASMER, Michael John George
Toronto, M6J 1X2 (CA)**
• **HILLMANN, Timo
411 03 Göteborg (SE)**

(74) Representative: **Kalhor-Witzel, Ronak
Norton Rose Fulbright LLP
Theatinerstaße 11
80333 München (DE)**

(54) **METHOD FOR MEASUREMENT BASED QUANTUM COMPUTER ERROR CORRECTION VIA FAULT COMPLEXES**

(57)     **It** is described a method of performing quantum error correction on a measurement-based quantum computer using fault complexes. A first chain complex is derived based on a first parity check matrix (PCM) and a second PCM that describe a quantum surface code. A second chain complex is derived based on a third PCM of a binary linear code. A fault complex having one or more boundary operators is generated based on a tensor product between the first and the second chain complexes. Qubits on the measurement-based quantum computer are prepared to implement a fault-tolerant graph state based on the one or more boundary operators of the fault complex. Quantum error correction can be performed based on the measurement of the prepared qubits.

100

| | |
|---|---|
| 102 | generating a first chain complex based on a first parity check matrix (PCM) and a second PCM, where the first PCM and the second PCM are representative of a quantum surface code |
| 104 | generating a second chain complex based on a third PCM of a binary linear code |
| 106 | preparing a fault complex having one or more boundary conditions based on a tensor product between the first and the second chain complexes |
| 108 | configuring a plurality of qubits on the measurement-based quantum computer to implement a fault-tolerant graph state based on the one or more boundary conditions of the fault complex |
| 110 | measuring one or more qubits of the plurality of qubits via a plurality of measurement devices on the measurement-based quantum computer to output measurement results |
| 112 | performing error correction based on the measurement results |

**Fig. 1**

EP 4 722 992 A1

**Description**

CROSS-REFERENCE TO RELATED APPLICATIONS

This application claims priority to, and the benefit of, United States Provisional Patent Application No. 63/703,271, filed on October 4, 2024, and titled "Method for Performing Single-Shot Error Correction on A Measurement-Based Quantum Computer.

BACKGROUND OF THE INVENTION

The present disclosure is related to quantum computing, and in particular to performing quantum error correction on a measurement-based quantum computer.

In recent years, substantial research and development efforts have focused on leveraging the quantum properties of quantum systems for practical human applications. These quantum technologies are expected to become increasingly mainstream in the near future. Much of the interest in this field stems from the vast potential of quantum systems, particularly in quantum computing which may be utilized to provide enhanced speed and efficiency in areas such as cybersecurity, drug discovery and material science, logistics optimization, and financial modelling to name a few. However, tackling such problems could only be realized with a useful quantum computer.

However, quantum states of matter are notoriously fragile and highly susceptible to environmental noise that may cause quantum decoherence - the loss of quantum properties. To build useful quantum computers, they must be designed to be resilient against errors and this has inspired a field of research known as quantum error correction (QEC), which strives to help alleviate noise and deal with the difficulty of reliably controlling fragile quantum systems. Thus, QEC is believed to be a fundamental aspect of any large-scale fault-tolerant quantum computer. In recent years, there has been remarkable progress in realizing QEC codes on various hardware platforms. Within QEC, there has been ever-more-sophisticated theoretical progress in understanding how to suppress errors more quickly, with fewer resources, and to a greater degree.

Currently, due to the random nature of quantum error sources, most QEC protocols rely on the concept of statistical distribution. Each logical qubit is encoded into a larger system of physical qubits or stabilizers, and each such physical qubit system is further duplicated into multiple copies. The physical qubit systems are then measured in a plurality of measurement iterations referred to as "shots" to provide probabilistic information on syndrome data that would permit an assessment of probable error and its likely value. However, in a realistic physical environment, the act of measuring the physical qubits is itself a noisy process.

Thus, there remains a need for an improved QEC protocol that is capable of reducing the number of measurement rounds without compromising the error threshold of the system, while allowing for decreasing computational resource demand, and simply physical implementation cost.

SUMMARY OF THE INVENTION

The present disclosure is related to quantum computing, and in particular to performing single-shot error correction on a measurement-based quantum computer.

In one aspect, the present disclosure provides a method of performing quantum error correction on a measurement-based quantum computer, comprising: generating a first chain complex based on a first parity check matrix (PCM) and a second PCM, where the first PCM and the second PCM are representative of a quantum surface code; generating a second chain complex based on a third PCM of a binary linear code; preparing a fault complex having one or more boundary operators based on a tensor product between the first and the second chain complexes; configuring a plurality of qubits on the measurement-based quantum computer to implement a fault-tolerant graph state based on the one or more boundary operators of the fault complex; measuring one or more qubits of the plurality of qubits via a plurality of measurement devices on the measurement-based quantum computer to output measurement results; and performing error correction based on the measurement results.

In another aspect, the present disclosure provides A non-transitory, computer-readable medium containing executable instructions that, when executed by computing processor, cause the computing processor to: generate a first chain complex based on a first parity check matrix (PCM) and a second PCM, where the first PCM and the second PCM are representative of a quantum surface code; generate a second chain complex based on a third PCM of a binary linear code; prepare a fault complex having one or more boundary operators based on a tensor product between the first and the second chain complexes; configure a plurality of qubits on the measurement-based quantum computer to implement a fault-tolerant graph state based on the one or more boundary operators of the fault complex; measure one or more qubits of the plurality of qubits via a plurality of measurement devices on the measurement-based quantum computer to output measurement results; and perform error correction based on the measurement results.

In a further still aspect, the present disclosure provides a hybrid quantum-classical computing system for performing quantum error correction, the system comprising: a classical computer configured to: generate a first chain complex based on a first parity check matrix (PCM) and a second PCM, where the first PCM and the second PCM are representative of a quantum surface code; generate a second chain complex based on a third PCM of a binary linear code; prepare a fault complex having one or more boundary operators based on a tensor product between the first and the second chain complexes; and a measurement-based quantum computing element operably coupled to the classical computer, the measurement-based quantum computer further comprising: a quantum processing unit configured to prepare a plurality of qubits on the measurement-based quantum computer to implement a fault-tolerant graph state based on the one or more boundary operators of the fault complex; one or more quantum measurement devices configured to measure one or more qubits of the plurality of qubits to output measurement results; the classical computer further configured to perform quantum error correction based on the measurement results.

In any of the above aspects, the second chain complex may be a one-dimensional chain complex.

In any of the above aspects, the quantum surface code may be a CSS code.

In any of the above aspects, the CSS code may be a Toric code.

In any of the above aspects, the binary linear code may be a repetition code.

In any of the above aspects, the first chain complex may further comprise a plurality of boundary operators, a first subset of boundary operators of the plurality of boundary operators are derived based on the first and second PCM's, and a second subset of the boundary operators, different from the first subset, are derived from metachecks on the first and second PCM's.

In any of the above aspects, the measuring may further comprise performing one or more iterations of measurements, the number of iterations of measurements being independent of a number of qubits of the plurality of qubits.

In any of the above aspects, the performing error correction may be based on a single iteration of measurements.

In any of the above aspects, the measuring may be informed by the one or more boundary operators of the fault complex.

In any of the above aspects, the first, second, and third PCM's may be rank deficient.

In any of the above aspects, the quantum surface code may be a CSS code, including a Toric code.

BRIEF DESCRIPTION OF DRAWINGS

Reference will now be made, by way of example, to the accompanying figures which show example embodiments of the present application, and in which:

FIG. 1 illustrates a flowchart of a method for performing quantum error correction on a measurement-based quantum computer in accordance with some aspects of the present disclosure;

FIG. 2(a) illustrates a distance-3 surface code Tanner graph;

FIG. 2(b) illustrates the hypergraph product of the Tanner graph in FIG. 2(a) with a repetition code check;

FIG. 2(c) illustrates the hypergraph product of the Tanner graph in FIG. 2(a) with a bit node;

FIG. 2(d) illustrates a unit cell of the fault complex obtained by stacking alternating layers of those shown in FIG. 2(b) and 2(c);

FIG. 2(e) illustrates a mathematical structure of the fault complex;

FIG. 3 illustrates a graphical state representation of an exemplary fault complex;

FIG. 4(a) illustrates a plot of sustainable thresholds for the 3D Toric code under a phenomenological noise model;

FIG. 4(b) illustrates a plot of sustainable thresholds for the 3D Toric code under a photonic GKP-based architecture noise model;

FIG. 4(c) illustrates a plot of sustainable thresholds for the 4D Toric code under a phenomenological noise model;

FIG. 4(d) illustrates a plot of sustainable thresholds for the 4D Toric code under a photonic GKP-based architecture noise model;

FIG. 5(a)-(c) illustrates three example plots for the threshold fitting procedure described herein for the 3D Toric code under the photonic GKP noise model with an $w = 2$ overlapping window decoder after 129 rounds of noisy syndrome measurements; and

FIG. 6 illustrates a simplified block diagram of an example embodiment of a system capable of performing error correction on a measurement-based quantum computer using fault complexes in accordance with the present disclosure.

DETAILED DESCRIPTION OF THE INVENTION

Certain scalable platforms for fault-tolerant quantum computers, namely photonics, are particularly well-suited to the model of measurement-based quantum computation (MBQC). In this paradigm, a fault-tolerant graph state (FTGS) can provide a useful framework for implementing QEC. In a graph state, one or more qubits may be arranged as nodes in a connected graph with edges of the graph representing entanglement of the qubits. Fault tolerance can be achieved by embedding error-correcting codes directly into the graph state structure, such as surface codes or color codes, which allow the system to identify and correct multiple errors while still enabling computation. Because measurement outcomes on graph states can be interpreted as stabilizer syndromes, the process aligns seamlessly with QEC protocols, ensuring that logical information is protected even in the presence of noise.

The present disclosure introduces the concept of a fault complex - a representation of faults in a dynamic QEC protocol rather than a static QEC code. Various methods for constructing an FTGS exist, with the concept of foliation offering a prescription for any Calderbank-Shor-Steane (CSS) code. The fault complexes obtained via foliation may be recast in the language of homology as a tensor product between a CSS code and a repetition code. This allows the computation of the properties of the QEC protocol, such as the fault distance, starting from any input CSS code.

In one aspect of the present disclosure, analysis of the fault complex enables the decoding of single-shot codes in MBQC and provides improved error thresholds for higher-dimensional topological codes, such as three-dimensional (3D) and 4D Toric codes. The increased threshold values and asymptotic space-time advantage allows the practical implementation of higher dimensional code, such as the 4D Toric code, in potentially compatible architectures such as photonics, trapped ions, or neutral atoms.

In another aspect of the present disclosure, the explicit determination of the homology groups of the fault complex may result in fewer measurement iterations, or shots, and that in some embodiments, a single-shot lattice surgery is possible in higher-dimensional topological codes. Known algorithmic fault tolerance offers asymptotically lower overhead, but it demands complex, correlated decoding. In contrast, the higher dimensional surface code, such as the 4D Toric code, is more amenable to windowed decoding, and while the formal analysis requires decoding over $O(\sqrt{(d)})$ rounds, the numerical findings associated with the present disclosure indicate that even fewer layers might suffice in practice.

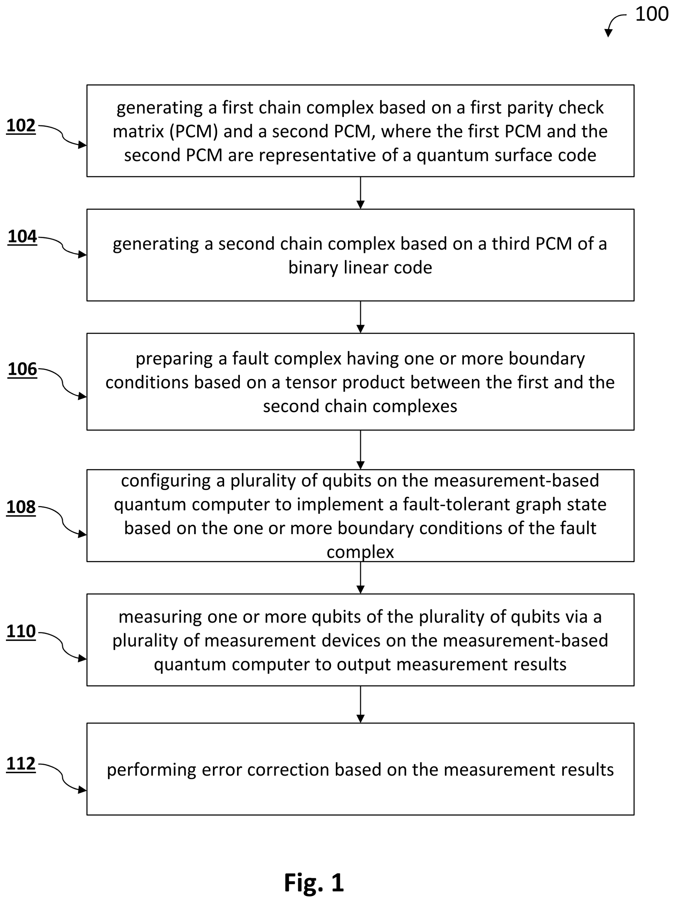

In one aspect of the present disclosure, the method of foliation is algebraically formulated as a tensor (or hypergraph) product of a base CSS code with a repetition code, yielding a fault complex. As a result, the detectors, logical correlations/errors, and fault distances of the fault complex can be directly calculated from the base code. FIG. 1 illustrates the flowchart of a method 100 for performing quantum error correction on a measurement-based quantum computer in accordance with some aspects of the present disclosure.

At step 102, two PCM's, such as $H_X$ and $H_Z$, of a quantum surface code are converted to a first chain complex.

Classically, an [n, k, d] binary linear code $C$ forms a $k$-dimensional subspace within the n-dimensional vector space over $\mathbb{F}_2$. Such a code can be defined by a parity-check matrix (PCM) $H$, where the codewords are the elements of $ker H$. The distance $d$ is the minimum Hamming weight of any nonzero codeword. In the present disclosure, $e_i$ is used to denote the i-th unit vector and $M$ to denote the j-th row of a matrix $M$.

A stabilizer code is the quantum analogue of a linear code and is defined by an abelian subgroup, $\mathcal{S}$, of the Pauli group with $-I \notin \mathcal{S}$. The codespace is the +1 eigenspace of $\mathcal{S}$; logical operators commute with $\mathcal{S}$ but are not themselves in $\mathcal{S}$. The notation $[[n, k, d]]$ describes a code in which the stabilizer group is generated by $m = n - k$ independent generators, which are themselves elements of the n-qubit Pauli group $\mathcal{P}_n$. The number of encoded qubits is $k$ and the distance $d$ is determined by the minimum weight non-trivial logical operator. A stabilizer code admitting a set of stabilizer generators that are each either X-type or Z-type operators is referred to as a CSS code. These codes can be described by two classical binary linear codes with PCMs $H_X$ and $H_Z$ representing stabilizer generators as tensor products of $X$ and $I$, and $Z$ and $I$, respectively. Commutativity of X-and Z-type generators is expressed through the condition $H_Z^T H_X = 0$. Typically, error correction proceeds via the measurement of the stabilizer generators, yielding the syndrome data, which is the list of stabilizer eigenvalues. This allows the detection and correction of Pauli errors that anti-commute with stabilizer generators; a classical decoder is used to infer recovery operators given a syndrome data.

A chain complex of length $n$ denotes a collection of $\mathbb{F}_2$-vector spaces $C_i$ that are related through linear maps $\partial_i^C$ called boundary operators as follows:

$$\mathcal{C} = \{0\} \xrightarrow{\partial_{n+1}^C} C_n \xrightarrow{\partial_n^C} ... \xrightarrow{\partial_2^C} C_1 \xrightarrow{\partial_1^C} C_0 \xrightarrow{\partial_0^C} \{0\} \tag{1}$$

with the composition fulfilling the condition of $\partial_i^C \partial_{i+1}^C = 0$. In the interest of clarity and brevity, the superscript may be omitted herein when distinction is not necessary. Elements of the kernel $Z_i(C) := \frac{Z_i(C)}{B_i(C)} = \ker \partial_i / im\, \partial_{i+1}$ is called the i-th homology group of $C$. Associated with $C$ is also a cochain complex, with coboundary operators $\delta^i \colon C_i \to C_{i+1}$ defined as

$$\delta^i = \partial_{i+1}^T :$$

$$C^T = \{0\} \xrightarrow{\delta^{-1}} C_0 \xrightarrow{\delta^0} C_1 \dots \xrightarrow{\delta^{n-1}} C_n \xrightarrow{\delta^n} \{0\} \qquad (2)$$

Elements of $Z^i := \ker \delta^i$ and $B^i := im\, \delta^{i-1}$ are referred to as cocycles and coboundaries, respectively, and $H^i := \ker \delta^i / im\, \delta^{i-1}$ is the i-th cohomology group.

At step 104, the PCM of a binary linear code is used to generate a second chain complex. In some embodiments, the binary linear code is a repetition code. A natural correspondence exists between codes and chain complexes. Given a binary linear code $C \subseteq \mathbb{F}_2^n$, one can associate to it a sequence of vector spaces and boundary maps that capture the relationships among codewords and parity checks. The binary linear code's parity-check matrix $H$ can be viewed as a boundary operator, mapping the space of coordinate positions (1-chains) to the space of parity constraints (0-chains). This naturally fits into a chain complex

$$0 \to C \to \mathbb{F}_2^n \xrightarrow{H} \mathbb{F}_2^m \to 0, \qquad (3)$$

where the inclusion of $C$ encodes the cycle space (kernel of $H$) and the image of $H$ represents the coboundary structure. Hence, in some embodiments, the second chain complex is a length-1 chain complex.

Each length-1 chain complex describes an [$n, k, d$] linear code with boundary map $\partial_1 = H$ from the vector space $\mathbb{F}_2^n$ to the space of syndromes $\mathbb{F}_2^r$ with $r \geq n - k$. Similarly, a CSS code, $C$, can be represented by a length-2 chain (sub) complex:

$$\dots \to C_{i+1} \xrightarrow{\partial_{i+1}} C_i \xrightarrow{\partial_i} C_{i-1} \to \cdots \qquad (4)$$

where, by convention, $\partial_{i+1} = H_Z^T$ and $\partial_i = H_X$, such that $\partial\partial_{i+1} = 0$ is encoded in the condition that $H_Z^T H_X = 0$. Identifying qubits with the space $C_i$, the code parameters are $n = \dim C_i$, $k = \dim H_i(C)$, and the logical operators are elements of the groups $H_i(C)$ and $H^i(C)$, with the smallest weight element defining $d$.

At step 106, a tensor product of the chain complexes generated from the CSS code and the binary linear code is used to determine a fault complex having one or more boundary operators. In the present disclosure, a fault complex is defined to be a length-3 chain (sub)complex $\mathcal{F}$ as:

$$\dots \to F_{i+2} \xrightarrow{\partial_{i+2}} F_{i+1} \xrightarrow{\partial_{i+1}} F_i \xrightarrow{\partial_i} F_{i-1} \to \cdots , \qquad (5)$$

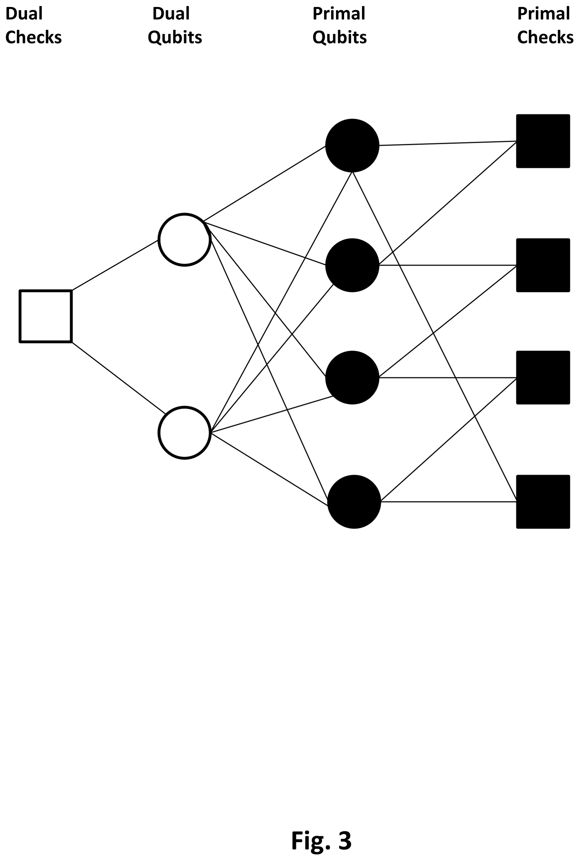

where primal fault locations are defined to be elements of $F_i$ and dual fault locations to be elements of $F_{i+1}$. The fault complex has $n = n_i + n_{i+1}$ total faults, where $n_i = \dim F_i$. The boundary operator $\partial_{i+1}$ determines equivalent primal and dual faults, where for example, the primal faults are X errors detected by Z stabilizers, and the dual faults are Z errors detected by X stabilizers. The faults are detected by the primal and dual checks, and all of the checks form respective primal and dual detector matrices. FIG. 3 illustrates a graphical state representation 300 of an exemplary fault complex, where each dual qubit in the graphical representation of the fault complex 300 connects to four other primal qubits. Each dual check is based on two dual qubits, and similarly each primal check is based on two primal qubits. Herein, the primal and dual detector matrices are defined as $D_X = \partial_i$ and $D_Z = \partial_{i+2}^T$, respectively. The syndrome of a primal fault $x \in F_i$ is $D_X x$ and the support of a primal detector $u \in F_{i-1}$ is $D_X^T u$, and similarly for dual faults and detectors. In a fault complex as defined herein, there is no requirement for the commutativity of the primal and dual detector matrices. Instead, there is the condition of $\partial_i \partial_{i+1} = 0$, which means that a primal fault that is equivalent to a dual fault has trivial (primal) syndrome, with an analogous interpretation for $\partial_{i+2}^T \partial_{i+1}^T = 0$.

The elements of $H^i(\mathcal{F})$ and $H_{i+1}(\mathcal{F})$ are referred to as primal and dual logical correlations, respectively. These represent the information that the fault complex is designed to protect. Similarly, the elements of $H^i()$ and $H_{i+1}(\mathcal{F})$ are the primal and dual logical errors, respectively. These operators may change the values of the logical correlations but have no syndrome and are therefore undetectable. Note that the number of primal logical correlations (or errors) $k_i = dim\, H^i(\mathcal{F}) = dim\, H_i(\mathcal{F})$ need not equal the number of dual logical correlations (or errors) $k_{i+1} = dim\, H_{i+1}(\mathcal{F}) = dim\, H^{i+1}(\mathcal{F})$. The primal (dual) fault distance $d_i$ ($d_{i+1}$) of the fault complex is the weight of the minimal weight primal (dual) logical error.

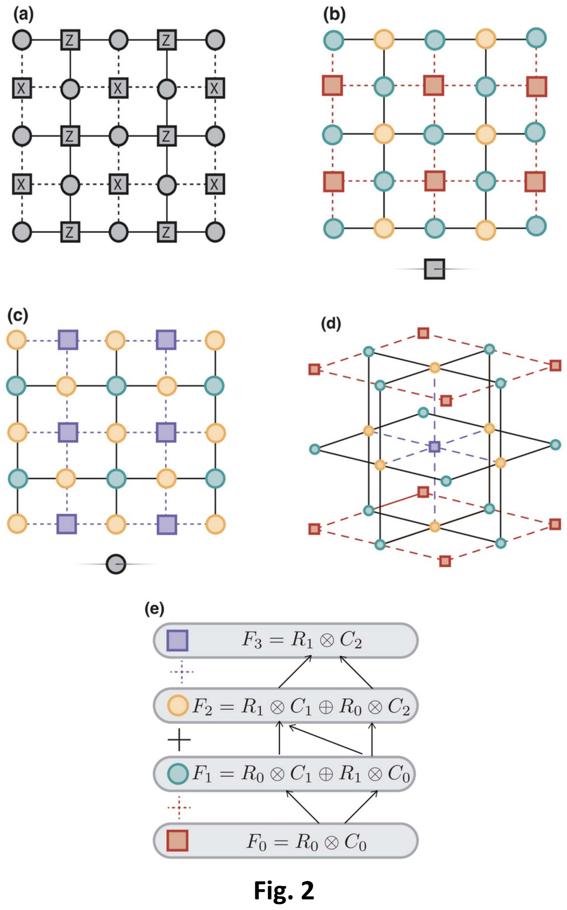

In some embodiments, an FTGS is derived from a CSS code through foliation. In one embodiment, the *X* and *Z* Tanner graphs of the code may be interpreted as alternating layers of the FTGS, and data qubits between adjacent layers are entangled with each other. FIGS. 2(a)-(d) illustrates foliation of a surface code conceptualized as a fault complex. FIG.2(a) shows a distance-3 surface code Tanner graph with circles representing qubits, squares with appropriate labels representing X and Z checks, and dashed and solid lines representing the connectivity of these checks, respectively. FIG.2(b) and 2(c) show the hypergraph product of the Tanner graph in FIG. 2(a) with a repetition code check and bit node, respectively. As may be discerned the figures, this yields two types of fault locations, represented by circles, along with primal (FIG.2(b)) and dual (FIG.2(c)) detectors, represented by the squares. Dashed and solid lines indicate boundary maps of the fault complex. For simplicity and clarity, out-of-plane connections are omitted from the figures. FIG. 2(d) illustrates a unit cell of the fault complex obtained by stacking alternating layers of those shown in FIG. 2(b) and 2(c). A dual detector (represented by the square at the body-center) is formed by the parity of six dual fault locations (represented by the circles at the face-centers). Vertical dashed lines are omitted for clarity. FIG. 2(e) illustrates a mathematical structure of the fault complex and its relation to FIGS. 2(b)-(d) where colored circles and squares are associated with chain complex vector spaces and lines are associated with boundary maps. Computation is then performed by a sequence of adaptive local measurements on the FTGS.

In one aspect of the present disclosure, foliation is algebraically formulated as the tensor (or hypergraph) product of a base CSS code with a repetition code, thus yielding a fault complex.

Let *C* be the chain complex describing a surface code, such as a CSS code, and let $\mathcal{R}$ be a length-1 chain complex describing a binary linear code, such as a repetition code. The resulting fault complex is obtained as the product complex $\mathcal{F} = \mathcal{R} \times \mathcal{C}$. The fault complex has spaces:

$$F_j = \bigoplus_{\ell+m=j} R_\ell \otimes C_m \tag{6}$$

where $R_\ell$ and $C_m$ are the $\ell$-th and m-th spaces of $\mathcal{R}$ and $\mathcal{C}$, respectively. The boundary maps of the fault complex are:

$$\partial_j = \left( \begin{array}{c|c} \mathbb{1}_r \otimes \partial_j^C & R \otimes \mathbb{1}_{n_{j-1}^C} \\ \hline 0 & \mathbb{1}_c \otimes \partial_{j-1}^C \end{array} \right) \tag{7}$$

where $\partial_j^C$ is the j-th boundary operator of *C,* and R is the $r \times c$ PCM of the binary linear code. FIG. 2(e) illustrates a diagrammatic representation of the fault complex vector space and boundary operators.

From the Künneth formula, the number of primal and correlations may be obtained as follows:

$$k_i = \dim H_0(\mathcal{R}) \dim H_i(\mathcal{C}) + \dim H_1(\mathcal{R}) \dim H_{i-1}(\mathcal{C})$$

$$k_{i+1} = \dim H_0(\mathcal{R}) \dim H_{i+1}(\mathcal{C}) + \dim H_1(\mathcal{R}) \dim H_i(\mathcal{C}) \tag{8}$$

One can show that the primal and dual fault distances of $\mathcal{F}$ are given by:

$$d_i = \min[d_0(\mathcal{R})d_i(\mathcal{C}), d_1(\mathcal{R})d_{i-1}(\mathcal{C})],$$

$$d_{i+1} = \min[d_0(\mathcal{R}^T)d_{i+1}(\mathcal{C}^T), d_1(\mathcal{R}^T)d_i(\mathcal{C}^T)] \tag{9}$$

where $d_i(\mathcal{C})$ and $d_i(\mathcal{C}^T)$ are equal to the minimal weight of an element in $H_i(\mathcal{C})$ and $H^i(\mathcal{C})$, respectively. For trivial homology groups the associated distance is defined as $\infty$.

By way of a non-limiting example to illustrate operations of the above, let the surface code be a CSS code, let $\mathcal{R}$ describe a repetition code with PCM $R$ and distance $\delta$, and let $\mathcal{C}$ be a length-2 chain complex describing the CSS code with PCMs $H_X$ and $H_Z$. Further, it is assumed that $R$, $H_X$, and $H_Z$ are full rank. The nontrivial boundary operators, $\partial_j, j \in \{1, 2, 3\}$, of the fault complex $\mathcal{F} = \mathcal{R} \times \mathcal{C}$ can be explicitly obtained from Equation (7). In particular, the rows of $\partial_1$ describe the support of primal detectors, where all are of the form $(e_\alpha \otimes [H_X]_\beta | [R]_\alpha \otimes e_\beta)$, with an analogous form for the columns of $\partial_3$. These can be conceptualized as the foliated stabilizers as shown in FIG. 2(d), which illustrates the formulation of a dual detector. Each detector (row) above is triggered by a fault on one of the qubits participating in the check $[H_X]_\beta$, or by a syndrome fault in the previous or next layer. The logical correlations are recovered from the homology group, that is, for example,

$$H_2(\mathcal{F}) \cong H_0(\mathcal{R}) \otimes H_2(\mathcal{C}) \oplus H_1(\mathcal{R}) \otimes H_1(\mathcal{C})$$
$$= \langle (0, 1 \otimes \ell_Z) | \ell_Z \in \ker H_X \,/\, im\, H_Z^T \rangle \qquad (10)$$

where $\cong$ denotes isomorphic to and $\ell_Z$ is a logical $Z$ operator of the base CSS code. This operator is a dual logical correlation where it acts as a copy of the logical $Z$ operator on the qubits in the $R_1 \otimes C_1$ block of the $F_1$ space. The dual logical errors are given by

$$H^2(\mathcal{F}) \cong H^0(\mathcal{R}) \otimes H^2(\mathcal{C}) \oplus H^1(\mathcal{R}) \otimes H^1(\mathcal{C})$$
$$= \langle (0, (1, 0, ..., 0) \otimes \ell_X) | \ell_X \in \ker H_Z \,/\, im\, H_X^T \rangle \qquad (11)$$

where $\ell_X$ is a logical X operator of the base CSS code. It may be observed that this operator acts as a logical X operator on one of the factors in the $R_1 \otimes C_1$ portion of the $F_1$ space. Applying Equation (9), the (dual) fault distance of $\mathcal{F}$ may be determined as $d_2 = d_X$, where $d_X$ is the X-distance of the base CSS code.

At step 108, a plurality of qubits may be prepared on a measurement-based quantum computer to implement the FTGS based on the one or more boundary operators of the fault complex derived in step 106. In a quantum computer, one or more resource states, such as GKP states or approximate GKP states, may be generated from one or more sources. The resource states are then entangled in temporal, or spatial, or both, dimensions to construct higher dimensional cluster states, which form lattice structures. The boundary operators of the fault complex are encoded into the graph state connectivity through the entanglement operations. Thus, by assigning qubits to n-cells of the complex (for example, edges in a surface code), the boundary maps $\partial_{n+1}$ and $\partial_n$ naturally define the stabilizer structure: Z-type stabilizers arise from the image of $\partial_{n+1}$, enforcing consistency of higher-dimensional boundaries, while X-type stabilizers correspond to the orthogonal complement of the kernel of $\partial_n$, enforcing consistency of coboundaries. For example, in MBQC, a cluster state may be prepared by initializing all qubits in $|+\rangle$ and applying controlled-Z entangling gates along the edges of the underlying complex, which embeds the boundary operator constraints directly into the stabilizer group of the state. Logical qubits then correspond to nontrivial homology classes of the complex, and computation proceeds through single-qubit measurements that propagate states along topologically protected paths. Thus, the boundary operators of a chain complex provide the algebraic blueprint for how qubits are placed, entangled, and measured in a measurement-based quantum computer.

At step 110, a subset of the lattice structure may be measured via one more measurement devices, such as detectors, in, for example the X-basis, to generate measurement patterns, such as in photonic MBQC.

At step 112, from the measurement outputs, the result of the graph state stabilizer measurement outcomes can be inferred. The possible presence of errors may be detected and corrected. For a surface code, stabilizer outcomes can be inferred from measuring a subset of qubits in chosen bases. When a group of physical qubits is measured, the parity of their outcomes encodes the eigenvalue of the stabilizer associated with that region of the lattice. In MBQC, this principle is extended: single-qubit measurements, combined with the entangling structure of the cluster state, propagate logical information forward, while correlated patterns in the outcomes provide indirect access to stabilizer syndromes. Thus, by exploiting the algebraic relations imposed by the boundary operators of the underlying fault complex, the stabilizer eigenvalues can be reconstructed from local measurement patterns.

Recall that a CSS code is represented by a length-2 chain complex, but certain CSS codes are naturally associated with length-3 or length-4 chain complexes. The presence of the additional vector spaces may be used to represent metachecks, i.e., redundancies between subsets of checks. In one aspect of the present disclosure, embodiments of the present disclosure utilize metachecks to perform fault-tolerant QEC by using fewer rounds, and in some embodiments, a single round of parity check measurements referred to as single-shot error correction.

By way of a non-limiting example of a code with metachecks, let $\mathcal{C}$ represent the 3D Toric code defined on an $L \times L \times L$ cubic tiling, which has single-shot QEC for $Z$ errors. The 3-D Toric code is chosen for ease of presentation, but the disclosure herein may also be applicable for other single-shot CSS codes such as the 4D Toric code. The metacheck matrix is defined as $M_X = \partial_1^{\mathcal{C}}$ and PCMs $H_X = \partial_2^{\mathcal{C}}$ and $H_Z = \left(\partial_3^{\mathcal{C}}\right)^T$. The primal detectors of the fault complex $\mathcal{F} = \mathcal{R} \times \mathcal{C}$ are given by $\partial_2$, which now contains the metachecks. The fault complex $\mathcal{F}$ is effectively a length-3 chain complex exactly because 'data' and 'measurement' faults are treated on an equal footing.

By way of an example, consider the fault complex $\mathcal{F} = \mathcal{R} \times \mathcal{C}$, where $\mathcal{R}$ describes a distance $\ell$ repetition code with the parity-check matrix $R$ and $C$ is a length four chain complex describing a CSS code with meta-checks. For a CSS code of this type, its PCM's ($H_X$, $H_Z$) and metachecks may be defined as:

$$H_X = \partial_2^{\mathcal{C}}, \qquad H_Z^T = \partial_3^{\mathcal{C}},$$
$$M_X = \partial_1^{\mathcal{C}}, \qquad M_Z^T = \partial_4^{\mathcal{C}}, \qquad (12)$$

where $M_X$ and $M_Z$ denote the meta-check matrices for $X$ and $Z$ checks, respectively.

Recall that the fault complex is formally a length five chain complex as per Equation (1):

$$\mathcal{C} = C_5 \xrightarrow{\partial_5} C_4 \xrightarrow{\partial_4} C_3 \xrightarrow{\partial_3} C_2 \xrightarrow{\partial_2} C_1 \xrightarrow{\partial_1} C_0 \qquad (13)$$

with boundary maps given by Equation (7).

The primal and dual qubits are defined with the vector spaces $C_2$ and $C_3$, respectively. Hence, the graph state connectivity is specified by $\partial_3$, while the primal and dual detectors are given by $D_X = \partial_2$ and $D_Z = \partial_4^T$, respectively.

Recall that this fault complex has no "meta-detectors" and can be reduced to a length three sub-complex without any loss of information. This is at least because the detector matrices $D_X$ and $D_Z$ already contain fault locations, using the terminology of CBQC, of data and ancilla faults. This can be seen by constructing, e.g., the matrix $D_X$ for $\delta = 2$ and performing column and row operations

$$D_X = \begin{pmatrix} M_X & & & & \\ \mathbb{1} & H_X & \mathbb{1} & & \\ & & M_X & & \\ & & \mathbb{1} & H_X & \mathbb{1} \\ & & & & M_X \end{pmatrix} \qquad (14)$$

In the matrix of Equation (14), the odd rows detect ancilla faults and the even rows detect data faults, while odd columns are ancilla fault locations and even columns are data fault locations. Unlike in the CBQC framework for single-shot error correction, in the fault complex scheme presented herein, there is no distinction between data faults and ancilla faults, or equivalently between detectors arising from stabilizers ($H_X$) and detectors arising from meta-checks ($M_X$). Thus, for any error $e_X$ with syndrome $s_X = D_X e_X$, it is provided that $\partial_1 \partial_X = \partial_1 \partial_2 e_X = 0$.

In Equation (14), two blocks are identified. The first block (top-left) is the relevant check matrix for a single round of the overlapping window decoder, specifying a single detector block in the overlapping window decoder for $w = 1$. The second block (bottom-right) is a single-stage decoding matrix similar to those proposed in known literature. The second block can be recovered from the first block by treating the ancilla faults from the previous round (first column of the first block) as perfect, which eliminates them from the decoding problem. The full block is the relevant detector check matrix for a window size $w = 2$.

The expression for the primal logical correlations and errors of $\mathcal{F}$ is the same as Equation (10), but now with $g \in ker\, H_X^T / im\, M_X^T$ and $h \in ker\, M_X / im\, H_X$. Consistent with other parts of the present disclosure, $g$ is the logical correlation relevant for stability experiments and lattice surgery, and $h$ is the logical error that can disrupt this correlation. In the 3D Toric code, there are three independent choices of $g$ given by all edges cutting through one of the independent 2D planes of the tiling. The corresponding $h$ vectors correspond to non-contractible chains of edges along one of the coordinate axes of the tiling. As a result, all choices of *h* have extensive weight, i.e., $|h| \geq L$. Thus, even for a fault complex formed using a constant-length repetition code, a macroscopic number of faults ($\sim L$) is necessary to disrupt the *g* logical correlations. This is captured by the primal fault distance of $\mathcal{F}$, $d_1 = \delta L$, where $\delta = d_1(\mathcal{R})$ is the distance of the repetition code. Therefore, higher dimensional topological codes, such as the 3D and 4D Toric codes, are compatible with single-shot lattice surgery, though at the cost of reduced performance. Accordingly, in some embodiments of the present disclosure, the full distance can be restored in those cases by choosing $\mathcal{R}$ such that $\delta = L = O(\sqrt{d})$, (where *d* is the distance of the code), or equivalently by performing $O(\sqrt{d})$ rounds of stabilizer measurement, instead of a single round of measurement, in the lattice surgery protocol. This should be contrasted with the 2D Toric code case where the number of measurement rounds is 0(*d*). Thus, a fault-tolerant quantum computing architecture based on higher dimensional surface codes, such as the 4D Toric code, may have an asymptotic spacetime overhead reduction when compared to the standard 2D Toric code architecture.

In some embodiments, the extension of the fault complex scheme described herein may be extended to subsystem codes. Recall that a CSS subsystem code is defined by two check matrices $H_X$ and $H_Z$, but unlike in the subspace code case, it is not required that $H_X H_T = 0$. The *X*-type stabilizers of the subsystem code are the elements of the row space of $H_X$ that have even overlap with all rows of $H_Z$, and vice versa for the Z-type stabilizers. Here, $S_X$ and $S_Z$ for the *X* - and *Z* -type stabilizer matrices, respectively.

It is known that in a foliated CSS subsystem code the ancilla qubit connections correspond to the rows of $H_X$ and $H_Z$ and the data qubits connections are unchanged. This suggests that, for a length-3 fault complex, the boundary operator $\partial_2$ describing the cluster state connectivity should be as in Equation (7) with $\partial_i^C = H_Z^T$ and $\partial_{i-1}^C = H_X$. However, for the other boundary operators, $S_X$ and $S_Z$ are used instead of $H_X$ and $H_Z$, as subsystem code detectors are formed from the stabilizers not the checks. Explicitly,

$$D_X = \partial_1 = \left(\mathbb{1}_r \otimes S_X \middle| R \otimes \mathbb{1}_{n_o}\right) \qquad (15)$$

$$\partial_2 = \left(\begin{array}{c|c} \mathbf{1}_r \otimes H_Z^T & R \otimes \mathbf{1}_{n_1} \\ \hline 0 & \mathbf{1}_c \otimes H_X \end{array}\right)$$

$$D_Z^T = \partial_3 = \left(\begin{array}{c} R \otimes \mathbb{1}_{n_2} \\ \hline \mathbb{1}_c \otimes S_C^T \end{array}\right) \qquad (16)$$

For the case of CSS subsystem codes with meta-checks, the $D_X$ and $D_Z$ may include $M_X$ and $M_Z$ (the metacheck matrices) and resemble Equation (7). Given the similarity of the detector matrices, the decoding problem for these codes may be identical in structure to the decoding problem for fault complexes presented herein *mutatis mutandis.*

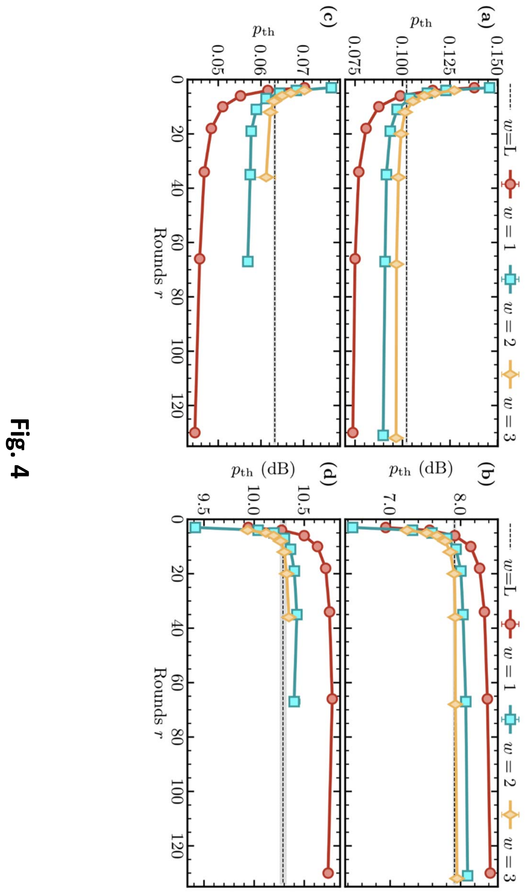

Estimating the error threshold of a single-shot code requires simulating multiple rounds of noisy syndrome measurement until the threshold has converged. Since in MBQC there may exist detectors spanning multiple rounds, thus decoding could proceed using an overlapping window decoder. In some embodiments, a (*w*, *c*)-overlapping window decoder may be used to determine in each round a correction for a window of $w \in \mathbb{N}^+$ rounds and to commit a correction to $c \leq w$ rounds. For the 3D Toric code example, the effective distance of the decoding window then becomes $min(wL, L^2)$; however, *wL* is the weight of time-like logical errors and for the present disclosure only space-like logical errors are considered as logical failures. Known results in decoding higher-dimensional topological codes are obtained by Higgot and Breuckmann in "Improved single-shot decoding of higher-dimensional hypergraph-product codes", PRX Quantum 4, 020332 (2023), arXiv:2206.03122 [quant-ph] (the entire disclosure of which is incorporated herein), which employs a single-stage decoding approach that is recovered using a (1, 1)-overlapping window decoder. The Applicant has determined that increasing *w* to 2 or 3 may significantly increase the sustainable threshold of 3D and 4D Toric codes compared to w = 1 when using belief propagation (BP) plus ordered statistics decoding (OSD). FIGS. 4(a)-(d) show the sustainable thresholds for 3D (FIGS. 4(a) and (b)) and 4D (FIGS. 4(c) and (d)) Toric codes under two noise models: phenomenological Pauli Z noise (FIGS. 4(a) and (c)) and a noise model for a photonic GKP-based architecture (FIGS. 4(b) and (d)). In FIG. 4, each marker represents the threshold for a (*w*, 1)-overlapping window decoder as a function of noisy syndrome rounds. The dashed line in each of the figures of FIG. 4 denotes the threshold from the optimal window choice of *w* = *L*. For *w* = 3, the thresholds for phenomenological Pauli Z noise of approximately 9.65% (3D) and 5.9% (4D) surpass all previous published results, approaching the thresholds achieved with the optimal window choice *w* = *L* as shown in FIGS. 4(a) and 4(c). Furthermore, the 3D Toric code sustainable threshold is close to the optimal value of 11% obtained from mapping the problem to a statistical mechanics model.

Under a noise model for a photonic GKP-based architecture, the 4D Toric code, we observe a threshold of approximately 10.35 dB, comparable to that of the 2D variant [1, 2]. The 3D code achieves a threshold of approximately 7.95 dB. In both cases, the w = 3 decoder archives thresholds comparable to the w = L decoder (see Fig. 4(b) and Fig. 4(d)).

It is known in the art that one of the common methods of obtaining an estimate of the threshold based on the simulation of finite system sizes comprises of performing a quadratic fit with the rescaled error rate, that is:

$$x = (p - p_{th})d^{\frac{1}{\mu}} \qquad (17)$$

$$f(x) = ax^2 + bx + c \qquad (18)$$

with p-th being the threshold to be fitted, *d* is the code distance, $\mu$ is a scaling parameter and *a, b, c* are free parameters of the quadratic polynomial. However, this approach cannot be followed for determining the threshold estimate of sustainable threshold simulations. For a sufficiently large number of decoding rounds, the observed logical error rate will saturate at $p_L$ = 1 - (0.5)$^k$ in the vicinity of the threshold, i.e., for $p \approx p_{th}$. Thus, it is impossible to observe a threshold as a crossing of curves for finite system sizes: this crossing lies in a region where the error rates saturate. Thus, in some embodiments, to accurately capture the behavior described above, an alternative fitting model is used, that is,

$$g(x) = a \left[ 1 - \left( 1 - \frac{1 + \tanh(bx)}{2} \right)^c \right] \qquad (19)$$

where *x* is the rescaled error rate as in Equation (17) and *a, b, c* are free fit parameters. In some embodiments, if the fit is performed over a sufficient range of *x*, one does not need to fit *a* and can set it instead to its analytical value *a* = 1 - (0.5)$^k$. The parameter *c* typically scales with the number of decoding rounds.

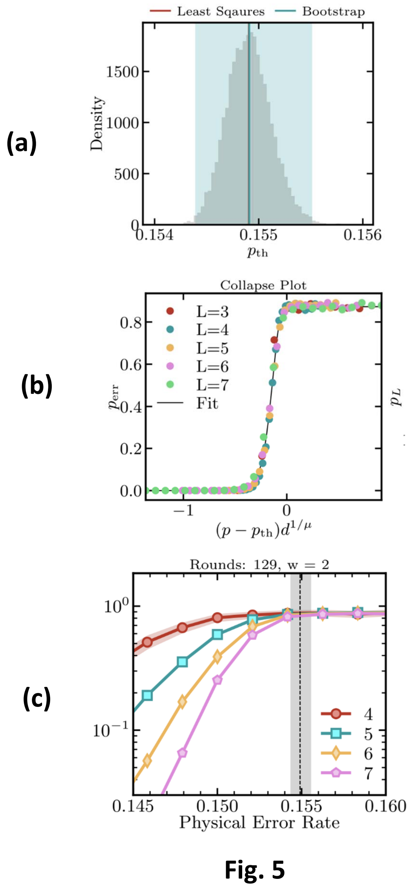

Based on the threshold estimation model in Equation (19) with bootstrap resampling technique using 10000 resamples. The obtained (asymmetric) error bars represent the 99% confidence intervals. FIG. 5 illustrates some example plots for the threshold fitting procedure for the 3D Toric code under the photonic GKP noise model with an w = 2 overlapping window decoder after 129 rounds of noisy syndrome measurements. FIG. 5(a) illustrates a histogram of the bootstrap resamples, with the mean (vertical bar) and 99% confidence interval (shaded region) shown. FIG. 5(b) illustrates a collapse plot of the fitted data. FIG. 5(c) illustrates the threshold plot of the data obtained from the sustainable threshold simulation with the threshold value highlighted as the vertical dashed line and 99% confidence intervals the grey shaded region.

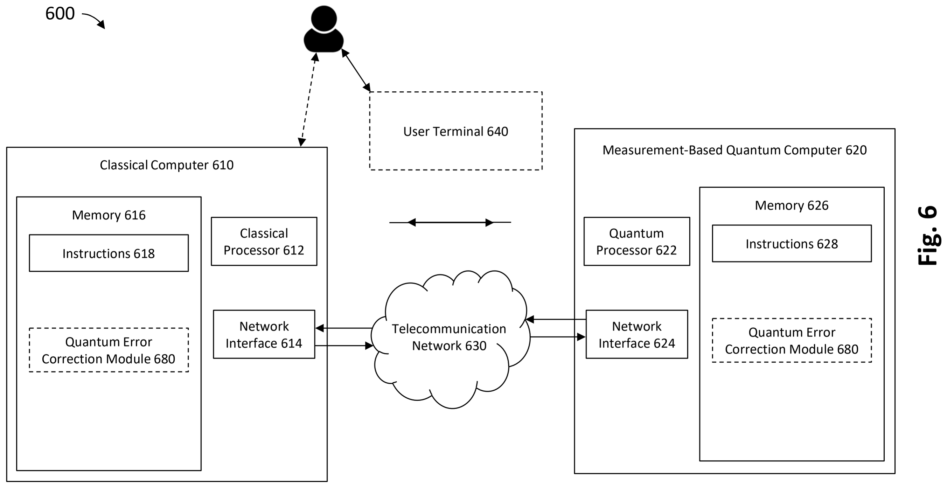

FIG. 6 is a simplified block diagram of an example embodiment of a system 600 capable of performing error correction on a measurement-based quantum computer using fault complexes in accordance with the present disclosure. As shown, system 600 is hybrid in nature and includes one or more classical computers 610 operably coupled to or in operable communication with one or more measurement-based quantum computers (MBQC) 620 via a telecommunication network 630.

Each of the classical computer(s) 610 may act as a controller to the MBQC's 620. In some embodiments, the classical computing elements could be implemented as a classical control module within one or more of the MBQC 620. In FIG. 6, the classical computers 610 may be configured to perform an initialization phase of the simulation as described in more detail herein. In some embodiments, each of the classical computers 610 may be, for example, a desktop terminal, a tablet computer, a notebook computer, a server, a cloud end, or any suitable processing system. Other classical computers suitable for implementing embodiments described in the present disclosure may be used, which may include components different from those discussed below. In some examples, the classical computer 610 may be implemented across more than one physical hardware unit, such as in a parallel computing, distributed computing, virtual server, or cloud computing configuration. Although FIG. 6 shows a single instance of each component of the classical computer 610, there may be multiple instances of each component shown.

As shown in FIG. 6, the classical computer 610 may include one or more classical processors 612, such as a central processing unit (CPU) with hardware accelerator, graphics processing unit (GPU), tensor processing unit (TPU), neural processing unit (NPU), microprocessor, digital signal processor, application-specific integrated circuit (ASIC), field-programmable gate array (FPGA), dedicated logic circuitry, dedicated artificial intelligence processor unit, or combinations thereof.

The one or more classical processors 612 are operably coupled to a network interface 614 for wired or wireless communication with the telecommunication network 630 (e.g., an intranet, the Internet, a P2P network, a Wide Area Network (WAN), and/or a Local Area Network (LAN)) to operably communicate with the MBQC 620 and one or more optional user terminals 640. The network interface 614 may include wired links (e.g., Ethernet cable) and/or wireless links (e.g., one or more antennas) for intra-network and/or inter-network communications. One or more end users may interact with system 600, for example, by inputting one or more of the PCM's, the binary linear code, through one or more user terminals 640 or, alternatively, inputting directly into the classical computer 610.

The classical computer 610 may also include one or more non-transitory memory(ies) 616 which may include a volatile or non-volatile memory (e.g., a flash memory, a random-access memory (RAM), and/or a read-only memory (ROM)). The non-transitory memory 616 may store instructions 618 for execution by the classical processors 612, for example, instructions to implement/execute a software-based quantum error correction algorithm module 680, in whole or in part, each of which is described in further detail below. Examples of non-transitory computer-readable media include a RAM, a ROM, an erasable programmable ROM (EPROM), an electrically erasable programmable ROM (EEPROM), a flash memory, a CD-ROM, or other portable memory storage.

Each of the MBQC 620 also includes a quantum processor 622 operably coupled to a memory 626 and a network interface 624 (which is also operably coupled to the memory 616). The memory 626 stores instructions 628 that are executable by the quantum processor 622. The instructions 628 can include, for example, instructions to implement / execute the software-based quantum error correction module 680, in whole or in part. The MBQC 620 may be based on a suitable form of physical qubit implementing a measurement based quantum computing architecture, including photonics, trapped-ions, and neutral atoms. The quantum processor 622 manipulates one of the physical properties of one or more input states by performing quantum operations such as preparing qubit registers and applying quantum logic gates. The quantum processor 622 may include one or more quantum measurement devices (e.g., homodyne detectors) configured to measure the output of the quantum processor 622 and provide information about the quantum result. The MBQC 620 receives input to a quantum simulation process from classical computer 610 and/or user terminal 640 and returns simulation results.

As shown in FIG. 6, the system 600 can be conceptualized as including a quantum error correction module 680. The quantum error correction module 680 can be implemented in software, in hardware, or in a combination of software and hardware. The quantum error correction module 680 may be implemented in full or in part on one or both of the classical computer 610 and MBQC 620, and hence the module is shown with dotted lines in both computers on FIG. 6. In some implementations, at least steps 108 and 110 of the method flowchart 100 in FIG. 1 are performed on the MBQC 620, whereas one or more other steps of method 100, such as steps 102 to 106, and 112 may be performed on a classical (non-quantum) computer.

**Claims**

1. A method of performing quantum error correction on a measurement-based quantum computer, comprising:

   generating a first chain complex based on a first parity check matrix (PCM) and a second PCM, where the first PCM and the second PCM are representative of a quantum surface code;
   generating a second chain complex based on a third PCM of a binary linear code;
   preparing a fault complex having one or more boundary operators based on a tensor product between the first and the second chain complexes;
   configuring a plurality of qubits on the measurement-based quantum computer to implement a fault-tolerant graph state based on the one or more boundary operators of the fault complex;
   measuring one or more qubits of the plurality of qubits via a plurality of measurement devices on the measurement-based quantum computer to output measurement results; and
   performing error correction based on the measurement results.

2. The method of claim 1, wherein the second chain complex is a one dimensional chain complex.

3. The method of claim 1, wherein the quantum surface code is a CSS code.

4. The method of claim 3, wherein the CSS code is a Toric code.

5. The method of claim 1, wherein the binary linear code is a repetition code.

6. The method of claim 1, wherein the first chain complex further comprises a plurality of boundary operators, a first subset of boundary operators of the plurality of boundary operators are derived based on the first and second PCM's, and a second subset of the boundary operators, different from the first subset, are derived from metachecks on the first and second PCM's.

7. The method of claim 1, wherein the measuring further comprises performing one or more iterations of measurements, the number of iterations of measurements being independent of a number of qubits of the plurality of qubits.

8. The method of claim 7, wherein the performing error correction is based on a single iteration of measurements.

9. The method of claim 1, wherein the measuring is informed by the one or more boundary operators of the fault complex.

10. The method of claim 1, wherein the first, second, and third PCM's are rank deficient.

11. A non-transitory, computer-readable medium containing executable instructions that, when executed by computing processor, cause the computing processor to:

generate a first chain complex based on a first parity check matrix (PCM) and a second PCM, where the first PCM and the second PCM are representative of a quantum surface code;
generate a second chain complex based on a third PCM of a binary linear code; prepare a fault complex having one or more boundary operators based on a tensor product between the first and the second chain complexes;
configure a plurality of qubits on the measurement-based quantum computer to implement a fault-tolerant graph state based on the one or more boundary operators of the fault complex;
measure one or more qubits of the plurality of qubits via a plurality of measurement devices on the measurement-based quantum computer to output measurement results; and
perform error correction based on the measurement results.

12. The computer-readable medium of claim 11, wherein the second chain complex is a one dimensional chain complex.

13. The computer-readable medium of claim 11, wherein the quantum surface code is a CSS code, including a Toric code.

14. The computer-readable medium of claim 11, wherein the binary linear code is a repetition code.

15. The computer-readable medium of claim 11, wherein the first chain complex further comprises a plurality of boundary operators, a first subset of boundary operators of the plurality of boundary operators are derived based on the first and second PCM's, and a second subset of the boundary operators, different from the first subset, are derived from metachecks on the first and second PCM's.

16. The computer-readable medium of claim 11, wherein the executable instructions to measure further causes the computing processor to perform one or more iterations of measurements, the number of iterations of measurements being independent of a number of qubits of the plurality of qubits.

17. The method of claim 16, wherein the performing error correction is based on a single iteration of measurements.

18. The method of claim 1, wherein the measuring is informed by the one or more boundary operators of the fault complex.

19. The method of claim 1, wherein the first, second, and third PCM's are rank deficient.

20. A hybrid quantum-classical computing system for performing quantum error correction, the system comprising:

a classical computer configured to:

generate a first chain complex based on a first parity check matrix (PCM) and a second PCM, where the first PCM and the second PCM are representative of a quantum surface code;
generate a second chain complex based on a third PCM of a binary linear code;
prepare a fault complex having one or more boundary operators based on a tensor product between the first and the second chain complexes; and

a measurement-based quantum computing element operably coupled to the classical computer, the measurement-based quantum computer further comprising:

a quantum processing unit configured to prepare a plurality of qubits on the measurement-based quantum computer to implement a fault-tolerant graph state based on the one or more boundary operators of the fault complex;
one or more quantum measurement devices configured to measure one or more qubits of the plurality of qubits to output measurement results;

the classical computer further configured to perform quantum error correction based on the measurement results.

100

| |
|---|
| **102** generating a first chain complex based on a first parity check matrix (PCM) and a second PCM, where the first PCM and the second PCM are representative of a quantum surface code |

| |
|---|
| **104** generating a second chain complex based on a third PCM of a binary linear code |

| |
|---|
| **106** preparing a fault complex having one or more boundary conditions based on a tensor product between the first and the second chain complexes |

| |
|---|
| **108** configuring a plurality of qubits on the measurement-based quantum computer to implement a fault-tolerant graph state based on the one or more boundary conditions of the fault complex |

| |
|---|
| **110** measuring one or more qubits of the plurality of qubits via a plurality of measurement devices on the measurement-based quantum computer to output measurement results |

| |
|---|
| **112** performing error correction based on the measurement results |

**Fig. 1**

**(a)**

**(b)**

**(c)**

**(d)**

**(e)**

$$F_3 = R_1 \otimes C_2$$

$$F_2 = R_1 \otimes C_1 \oplus R_0 \otimes C_2$$

$$F_1 = R_0 \otimes C_1 \oplus R_1 \otimes C_0$$

$$F_0 = R_0 \otimes C_0$$

**Fig. 2**

**Dual
Checks**  **Dual
Qubits**  **Primal
Qubits**  **Primal
Checks**

**Fig. 3**

Fig. 4

**(a)**

**(b)**

**(c)**

**Fig. 5**

Fig. 6

Europäisches Patentamt

European Patent Office

Office européen des brevets

# EUROPEAN SEARCH REPORT

**Application Number**

EP 25 20 6535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAKUYA OKUDA ET AL: "Anomaly inflow for CSS and fractonic lattice models and dualities via cluster state measurement", ARXIV.ORG, CORNELL UNIVERSITY LIBRARY, 201 OLIN LIBRARY CORNELL UNIVERSITY ITHACA, NY 14853, 24 May 2024 (2024-05-24), XP091767498, * abstract * * chapters I-II; page 3 - page 17; figures 1-7 * * chapter VI; page 32 - page 33 * | 1-20 | INV. G06N10/20 G06N10/60 G06N10/70 |
| A | OSCAR HIGGOTT ET AL: "Improved single-shot decoding of higher dimensional hypergraph product codes", ARXIV.ORG, CORNELL UNIVERSITY LIBRARY, 201 OLIN LIBRARY CORNELL UNIVERSITY ITHACA, NY 14853, 27 June 2023 (2023-06-27), XP091547628, DOI: 10.1103/PRXQUANTUM.4.020332 * abstract * * chapters I-IV; page 1 - page 3 * | 7,8,16, 17 | |
| A | YI TAN ET AL: "Fracton models from product codes", ARXIV.ORG, CORNELL UNIVERSITY LIBRARY, 201 OLIN LIBRARY CORNELL UNIVERSITY ITHACA, NY 14853, 13 December 2023 (2023-12-13), XP091667860, * abstract * * page 1 - page 5; figures 1-3 * | 10,19 | |

|  |
|---|
| TECHNICAL FIELDS SEARCHED (IPC) |
| G06N |

The present search report has been drawn up for all claims

| Place of search | Date of completion of the search | Examiner |
|---|---|---|
| The Hague | 3 December 2025 | Hasnas, Sergiu |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63703271

**Non-patent literature cited in the description**

- **HIGGOT** ; **BREUCKMANN**. Improved single-shot decoding of higher-dimensional hypergraph-product codes. *arXiv:2206.03122*, 2023, vol. 4, 020332